# EUROPÄISCHE PATENTANMELDUNG

(11) **EP 1 645 758 A2**
(43) Veröffentlichungstag der Anmeldung: **12.04.2006**
(21) Anmeldenummer: 05018489.4
(22) Anmeldetag: 25.08.2005
(51) Int. Cl.: F16B 13/06

(54) **Eine in einem Arbeitsgang einschraubbare Dübelschraube**

(30) Priorität: 06.10.2004 DE 202004015509 U
(71) Anmelder: Hsu, Chin-Jen, Lujhu Township Kao hsiung (TW)
(72) Erfinder: Hsu, Chin-Jen, Lujhu Township Kao hsiung (TW)
(74) Vertreter: Viering, Jentschura & Partner

(57) **Zusammenfassung**

Bei der vorliegenden Erfindung handelt es sich um eine in einem Arbeitsgang einschraubbare Dübelschraube, die sich aus einem Körper, einer Spreizschraube und einem Bohrkopf zusammensetzt, wobei der Körper die Form einer hohlen Stange hat und die Spreizschraube enthalten kann. An einem Ende der Spreizschraube ist ein konischer Kopf, der gerade zu dem konischen Loch im Inneren des Körpers passt, angeordnet. Am Ende dieses konischen Kopfs befindet sich eine Antriebsrille, in die ein Werkzeug eingesteckt werden kann. Am anderen Ende der Spreizschraube ist ein Außengewinde angeordnet, das dem inneren Schraubenloch auf der Innenseite des Körpers entspricht. Dieses Außengewinde ragt aus dem Körper heraus und kann mit dem Bohrkopf verbunden werden. Auf der Außenseite des Körpers sind zusätzlich spiralförmige Erhebungen angeordnet. Bei der Handhabung wird die Schraube mit einem Werkzeug angetrieben und an der vorgesehenen Stelle bohrt der Bohrkopf, damit der Körper darin mitdrehen und bedeckt werden kann, bis daß der Kopfteil des Körpers nicht weiter eingeschraubt werden kann. So wird der Körper der Schraube fixiert. Nun schraubt sich das Außengewinde der Spreizschraube weiterhin in das innere Schraubenloch des Körpers ein, was die Außenseite des Körpers dazu veranlasst, sich nach außen auszudehnen. Die vorliegende Erfindung wird dadurch gekennzeichnet, daß die Schraube durch diese Verformung fest an der vorgesehenen Stelle verankert werden kann.

## Beschreibung

Bei der vorliegenden Erfindung handelt es sich um eine in einem Arbeitsgang einschraubbare Dübelschraube, die sich zum Festschrauben auf Gipsplatten, Metallplatten, Holzplatten, Plastikplatten und Wänden eignet, d. h. bei dieser Dübelschraube ist es nicht nötig, dass man zunächst ein Loch bohrt, sondern das Bohren und Festschrauben kann in einem Arbeitsgang erledigt werden. Diese Dübelschraube besteht aus dem Körper, einer Spreizschraube und einem Bohrkopf. Die Spreizschraube ist im Inneren des Körpers festgeschraubt und verfügt am äußeren Ende über einen Bohrkopf, wobei der Bohrkopf das Bohren des Loches übernimmt, und gleichzeitig der Körper der Dübelschraube in das Loch hineingeschraubt wird. Die Spreizschraube bewirkt eine Expandierung und Deformierung der Körpers, so dass der Körper fest an der vorgesehenen Stelle verankert wird.

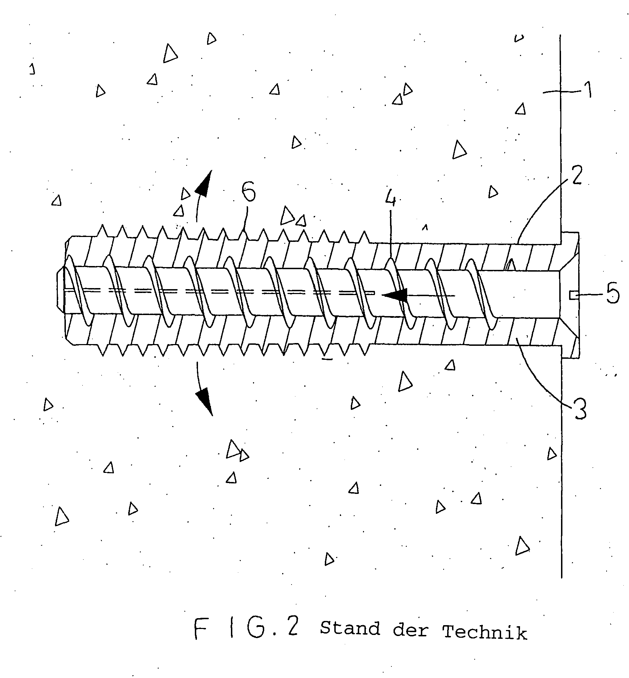

Bei Schrauben mit Dübeln, wie sie für Gipsplatten und Wände normalerweise benutzt werden (siehe **Fig, 1,** eine räumliche Zerlegung der herkömmlichen Ausführungsform, und **Fig. 2**, eine Darstellung der herkömmlichen Ausführungsform im Gebrauch), muss an der vorgesehenen Stelle der Gipsplatte oder Mauer **1** zunächst ein Loch **2** gebohrt werden, dann wird der aus Plastik hergestellte Dübel **3** in das Loch **2** hineingehauen. Zum Schluss wird in das Schraubenloch **4** in der Mitte des Dübels **3** die Schraube **5** hineingeschraubt. Durch das Einschrauben der Schraube **5** entsteht eine Ausdehnungswirkung nach außen, so dass die konvexen Positionierungszähne **6** des Dübels **3** das Loch **2** verengen und für eine Stabilisierung sorgen.

Bei oben beschriebenem Dübel **3** muss in der Praxis immer zunächst ein Loch **2** gebohrt werden, damit der Dübel **3** in das Loch **2** hineingeschlagen werden und schließlich die Schraube **5** im Dübel **3** festgeschraubt werden kann. Dieser gesamte Vorgang ist etwas umständlich und nicht sehr praktisch. Man benötigt dafür nicht nur einen Bohrer, sondern auch einen elektrischen Schraubenzieher und der verwendete Dübel **3** ist auch dann, wenn er im Loch **2** fixiert ist, nicht wirklich sehr fest fixiert, denn die konvexen Positionierungszähne **6** des Dübels **3** dehnen sich nur ein klein wenig nach außen aus, es erfolgt keine richtige Einlegung in das Loch **2,** so dass sich die Schrauben leicht lockern können. Dies sind zwei Nachteile, die es zu überwinden gilt.

Die neuartige Technik zur Überwindung des Problems der Lochbohrung liegt darin, dass der Körper der Dübelschraube im Inneren ausgehöhlt ist, so dass eine Spreizschraube darin Platz finden kann, an deren äußerem freien Ende ein Bohrkopf angebracht ist. Mit Hilfe dieses Bohrkopfes wird das Loch gebohrt und der Körper der Dübelschraube in das Loch hineingezogen. Auf diese Weise kann der Arbeitsvorgang vereinfacht werden und es ist nicht nötig, eine Bohrmaschine zu verwenden.

Die neuartige Technik zur Fixierung der Dübelschraube liegt darin, dass der Körper der Dübelschraube im Inneren ausgehöhlt ist, so dass eine Spreizschraube darin Platz finden kann, dass sich an der Außenseite des Körpers spiralförmige Erhebungen befinden und dass sich im Inneren des Körpers ein konisches Loch und ein Gewindeloch befinden, während sich die Spreizschraube entsprechend aus einem konischen Kopf und einem Außengewinde zusammensetzt. Beim Festschrauben der Spreizschraube expandiert und verformt sich der äußere Teil des Körpers infolge des Drucks durch die Spannung von beiden Enden, wobei die spiralförmigen Erhebungen nach außen expandieren, wodurch der Fixierungseffekt der Dübelschraube erhöht werden kann und diese nicht mehr leicht herausfällt.

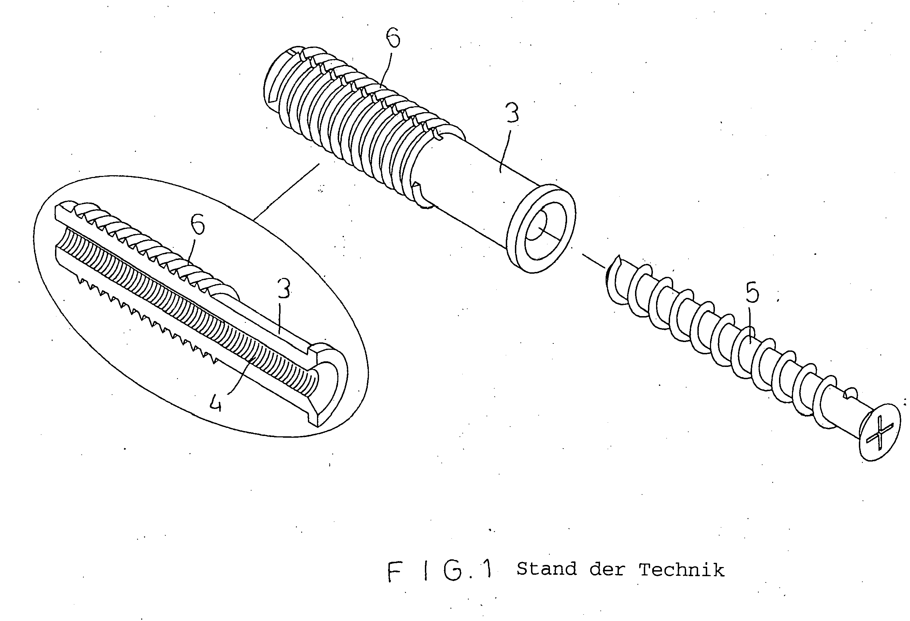

- **Fig. 1**: stellt eine räumliche Zerlegung der herkömmlichen Ausführungsform dar.
- **Fig. 2**: stellt die herkömmliche Ausführungsform im Gebrauch dar.
- **Fig. 3**: stellt die räumliche Zusammensetzung der Ausführungsform **1** der vorliegenden Erfindung dar.
- **Fig. 4**: stellt die räumliche Zerlegung der Ausführungsform **1** der vorliegenden Erfindung dar.
- **Fig. 5**: stellt eine Schnittdarstellung der Zusammensetzung der Ausführungsform **1** der vorliegenden Erfindung dar.
- **Fig. 6**: stellt die räumliche Zusammensetzung der Ausführungsform **2** der vorliegenden Erfindung dar.
- **Fig. 7**: stellt die räumliche Zerlegung der Ausführungsform **2** der vorliegenden Erfindung dar.
- **Fig. 8**: stellt eine Schnittdarstellung der Zusammensetzung der Ausführungsform **2** der vorliegenden Erfindung dar.
- **Fig. 9**: stellt die Ausführungsform **1** der vorliegenden Erfindung bei der Lochbohrung dar.

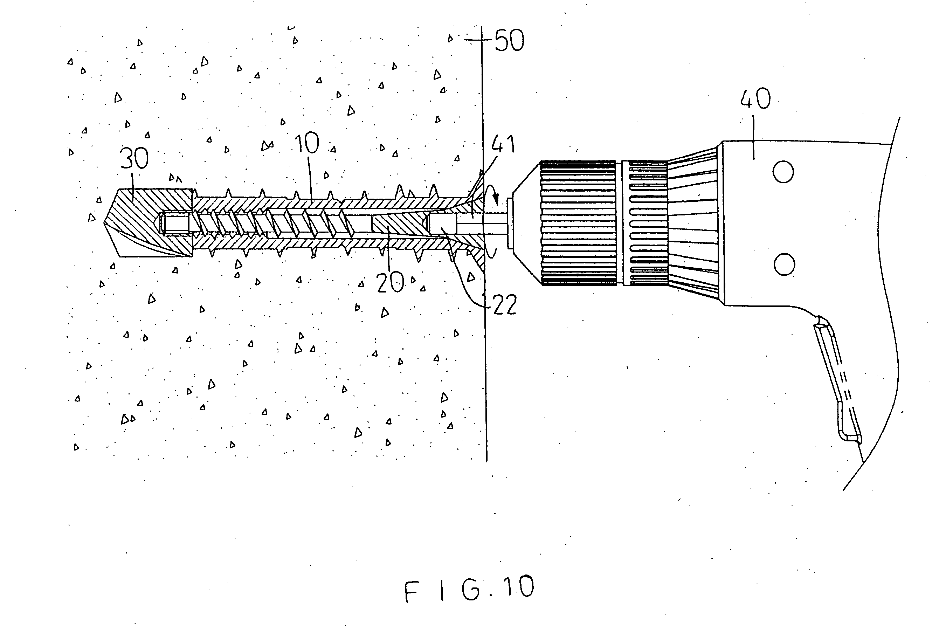

- **Fig. 10**: stellt die Ausführungsform **1** der vorliegenden Erfindung beim Einschrauben dar.
- **Fig. 11**: stellt die Ausführungsform **1** der vorliegenden Erfindung im ausgedehnten Zustand dar.
- **Fig. 12**: stellt die Ausführungsform **2** der vorliegenden Erfindung im ausgedehnten Zustand dar.

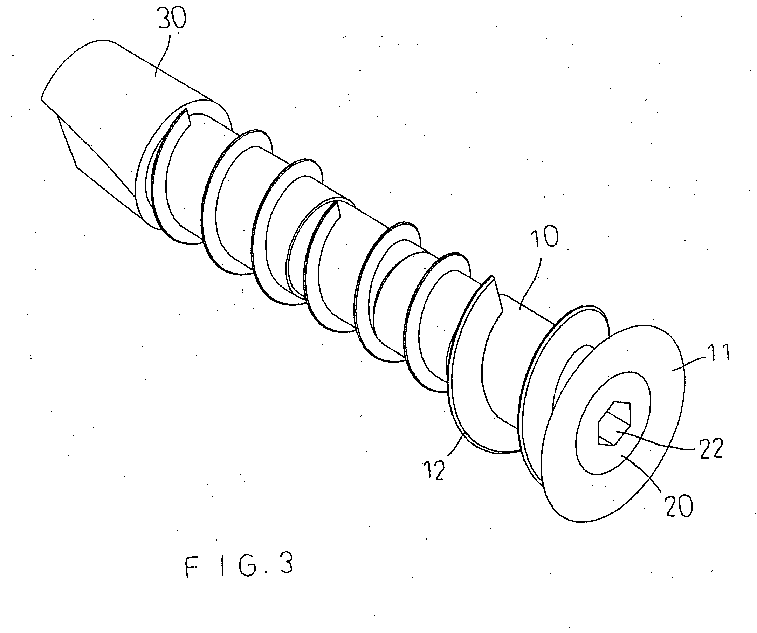

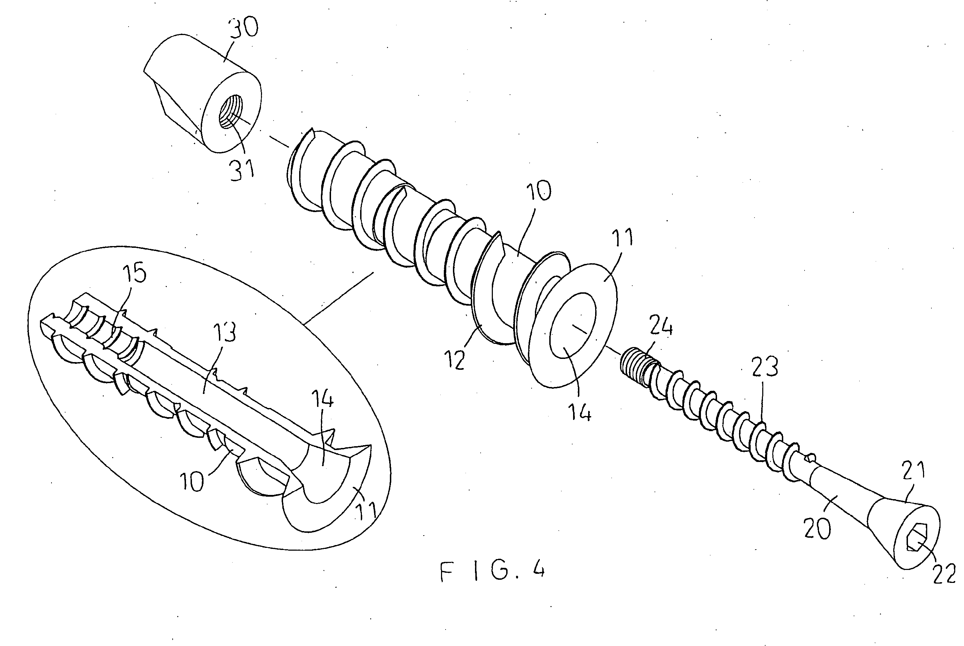

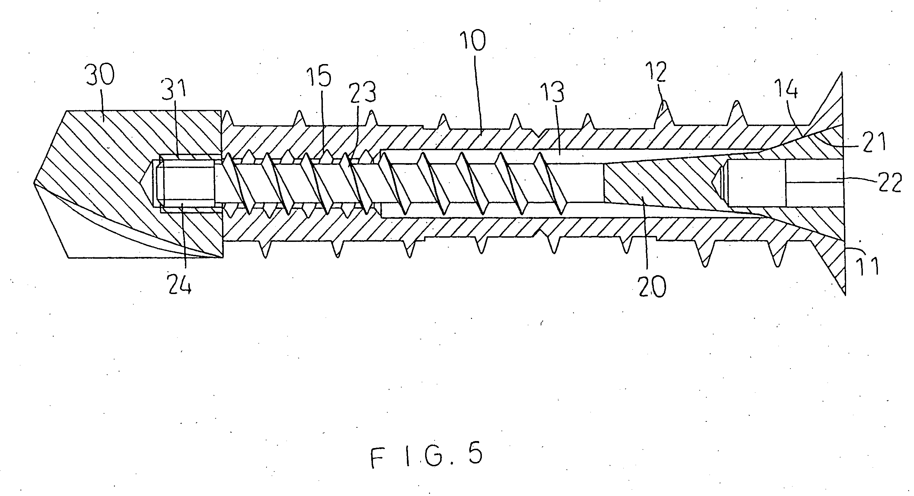

Eine in einem Arbeitsgang einschraubbare Dübelschraube, wie in **Fig. 3,** der räumlichen Zusammensetzung der Ausführungsform **1** der vorliegenden Erfindung, und **Fig. 4**, der räumlichen Zerlegung der Ausführungsform 1 der vorliegenden Erfindung, und **Fig. 5**, der Schnittdarstellung der Zusammensetzung der Ausführungsform **1** der vorliegenden Erfindung, abgebildet. Die Dübelschraube der vorliegenden Erfindung besteht hauptsächlich aus einem Körper **10,** einer Spreizschraube **20** und einem Bohrkopf **30.**

Der Körper **10** ist aus Plastik(Nylon)-Material hergestellt; es handelt sich dabei um einen stabförmigen Körper, der im Inneren hohl ist. Der Körper **10** besitzt am Kopfende einen verbreiterten Stopprand **11,** an der Außenseite des Körpers **10** befinden sich spiralförmige Erhebungen **12,** im Inneren des Körpers **10** befindet sich ein durchgehendes Loch **13;** am Kopfende des Körpers **10** läuft das durchgehende Loch **13** in ein konisches Loch **14** aus; am anderen Ende des durchgehenden Lochs **13** des Körpers **10** befindet sich ein Schraubengewinde **15,** das dazu dient, dass die Spreizschraube **20** in das durchgehende Loch **13** eingeschraubt werden kann.

Die Spreizschraube **20** ist ebenfalls aus Plastik(Nylon)-Material hergestellt; das eine Ende der Spreizschraube **20** läuft in einen konischen Kopf **21** aus, der dem konischen Loch **14** des Körpers **10** entspricht. Im Inneren dieses konischen Kopfes **21** befindet sich eine sechseckige Antriebskerbe **22,** in die der sechseckige Antriebskopf **41** eines elektrischen Schraubenziehers **40** gesteckt werden kann. Am anderen Ende der Spreizschraube **20** ist etwa ab der Mitte ein erhabenes Schraubengewinde **23** angebracht, das dem Schraubengewinde **15** im Inneren des Körpers **10** entspricht; dieses erhabene Schraubengewinde **23** ragt über den Körper **10** hinaus. Am Ende des erhabenen Schraubengewindes **23** befindet sich ein dichteres erhabenes Schraubengewinde **24,** das in den Bohrkopf **30** eingeschraubt werden kann.

Der Bohrkopf **30** ist aus Metall (mittelgekohltem Stahl)-Material hergestellt; der Bohrkopf **30** besitzt in seinem Zentrum ein Loch mit Schraubengewinde **31,** in das das erhabene Schraubengewinde **24** der Spreizschraube **20** fest eingeschraubt werden kann.

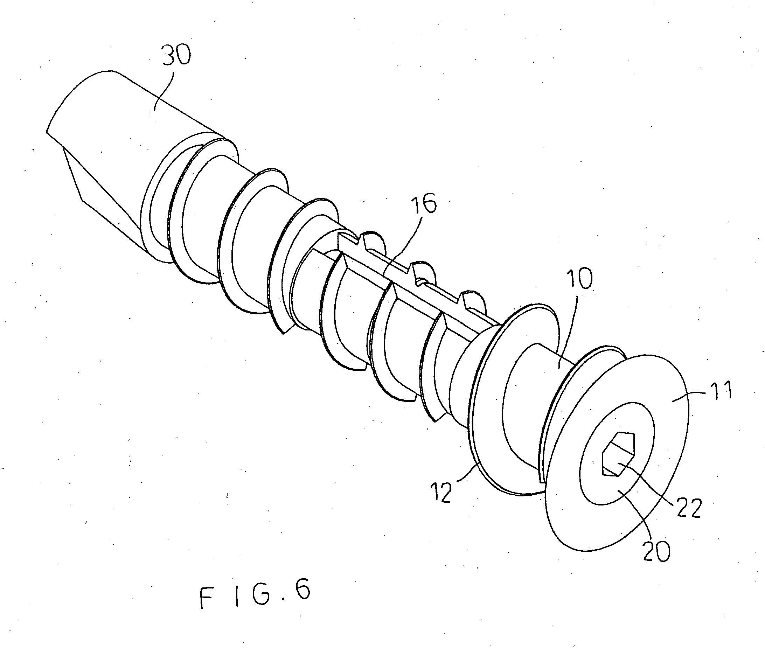

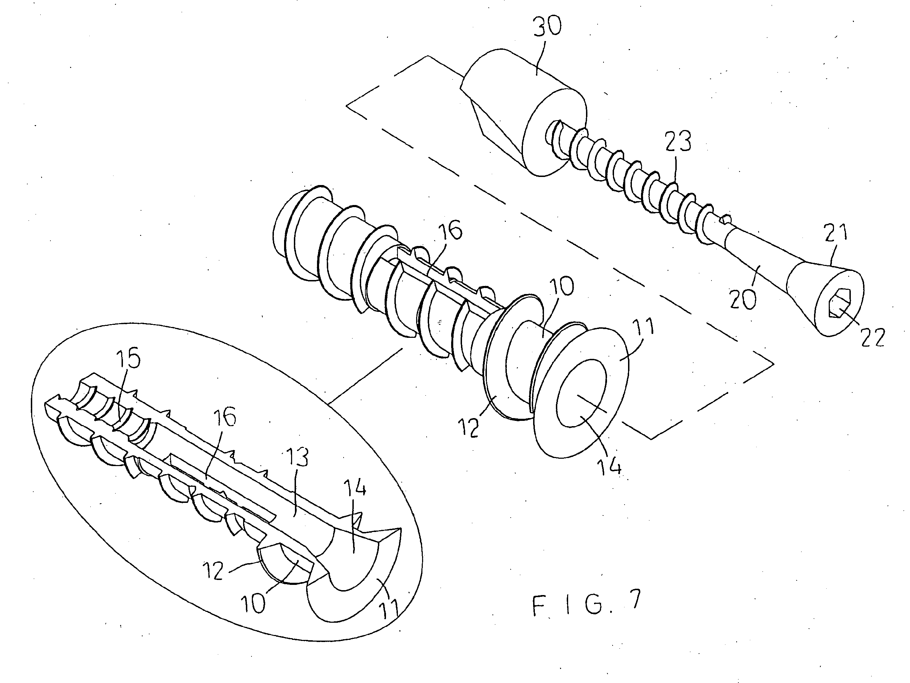

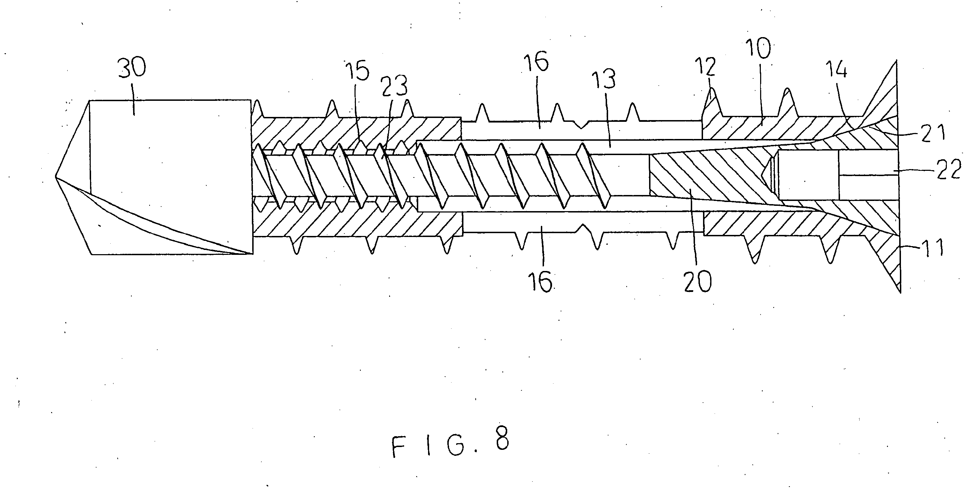

Oben beschrieben sind die Einzelteile einer in einem Arbeitsgang einschraubbaren Dübelschraube der vorliegenden Erfindung. Siehe **Fig. 6** und **Fig. 7**, die räumliche Zusammensetzung der Ausführungsform **2** der vorliegenden Erfindung und die räumliche Zerlegung der Ausführungsform **2** der vorliegenden Erfindung, sowie **Fig. 8**, die Schnittdarstellung der Zusammensetzung der Ausführungsform **2** der vorliegenden Erfindung: Hier wurde die Spreizschraube **20** zunächst mit dem Bohrkopf **30** verbunden und dann an der Außenseite der Spreizschraube **20** mit Hilfe der Spritzformmethode der Körper **10** angebracht. Der Körper **10** weist hier im Mittelteil des stangenförmigen Körpers eine Rille **16** auf, die mit dem durchgehenden Loch **13** verbunden ist.

Die Spreizschraube **20** der oben beschriebenen in einem Arbeitsgang einschraubbare Dübelschraube der vorliegenden Erfindung kann an ihrem konischen Ende **21** auch eine kreuzförmige Antriebskerbe (nicht abgebildet) aufweisen, so dass sie für Schraubenzieher mit kreuzförmigem Antriebskopf (nicht abgebildet) geeignet ist.

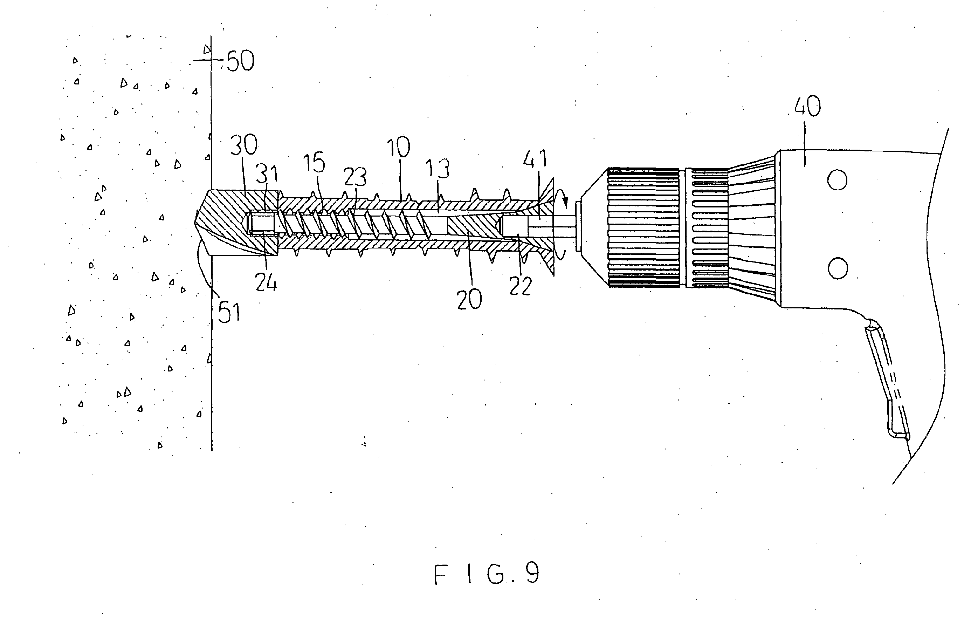

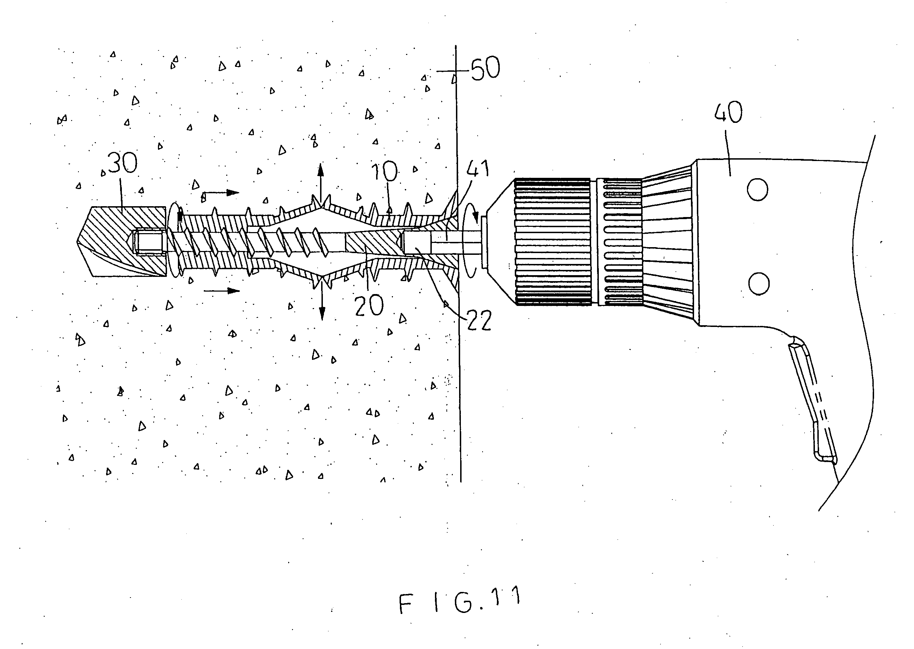

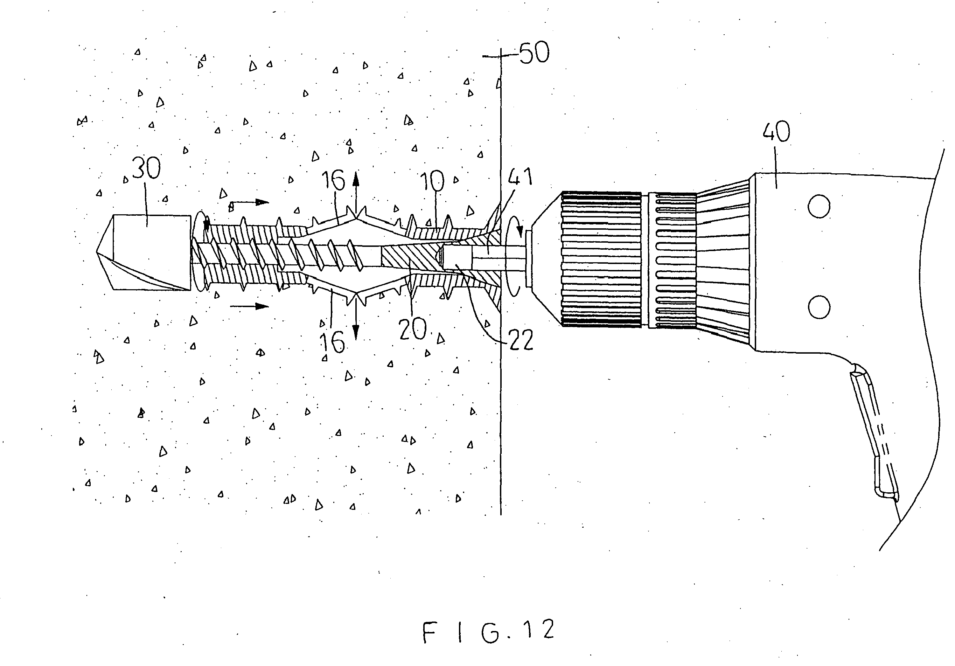

Die vorliegende Erfindung aus oben beschriebenen Einzelteilen stellt eine in einem Arbeitsgang einschraubbare Dübelschraube dar, die wie nachfolgend funktioniert:
Siehe **Fig. 9,** die Darstellung der Ausführungsform **1** der vorliegenden Erfindung bei der Lochbohrung: Steckt man den Antriebskopf **41** des elektrischen Schraubenziehers **40** in die Antriebskerbe **22** der Spreizschraube **20,** dann bohrt der Bohrkopf **30** an der erwünschten Stelle der Platte oder der Wand **50** ein Loch **51.**
Siehe **Fig, 10,** die Darstellung der Ausführungsform **1** der vorliegenden Erfindung beim Einschrauben: Gleichzeitig mit dem Bohren wird der Körper **10** der Dübelschraube in das Loch **51** hineingeschraubt.
Siehe **Fig. 11,** die Darstellung der Ausführungsform **1** der vorliegenden Erfindung im ausgedehnten Zustand: wenn der verbreiterte Stopprand **11** des Körpers **10** auf die Platte oder die Wand **50** stößt, kann der Körper **10** nicht weiter eingeschraubt werden. Der Körper **10** ist dann fixiert und bewegt sich nicht weiter. Das erhabene Schraubengewinde **23** der Spreizschraube **20** wird jedoch weiter in das Gewinde **15** des Körpers **10** eingeschraubt. Das führt dazu, dass sich der Körper **10** durch die Spannung, die durch den Druck auf beide Enden der Spreizschraube **20** entsteht, ausdehnt und verformt und sich die spiralförmigen Erhebungen **12** nach außen ausdehnen und die Dübelschraube fest im Loch **51** verankern.
Siehe **Fig. 12**, die Darstellung der Ausführungsform **2** der vorliegenden Erfindung im ausgedehnten Zustand: wenn der verbreiterte Stopprand **11** des Körpers **10** auf die Platte oder die Wand **50** stößt, kann der Körper **10** nicht weiter eingeschraubt werden. Der Körper **10** ist dann fixiert und bewegt sich nicht weiter. Das erhabene Schraubengewinde **23** der Spreizschraube **20** wird jedoch weiter in das Gewinde **15** des Körpers **10** eingeschraubt. Das führt dazu, dass sich die Rille **16** des Körpers **10** durch die Spannung, die durch den Druck auf beide Enden der Spreizschraube **20** entsteht, ausdehnt und verformt und sich die spiralförmigen Erhebungen **12** nach außen ausdehnen und die Dübelschraube fest im Loch **51** verankern.

## Patentansprüche

1. Eine in einem Arbeitsgang einschraubbare Dübelschraube, **dadurch gekennzeichnet, dass** sie sich aus einem Körper, einer Spreizschraube und einem Bohrkopf zusammensetzt, wobei der Körper die Form einer hohlen Stange hat und im Inneren ein durchgehendes Loch aufweist, das sich am Kopfende des Körpers zu einem konischen Loch ausweitet, während sich am anderen Ende des durchgehenden Lochs des Körpers ein Schraubengewinde befindet; dass die Spreizschraube an einem Ende einen konischen Kopf aufweist, der dem konischen Loch des Körpers entspricht, und dass sich in diesem konischen Kopf eine Antriebsrille befindet, in die ein Werkzeug eingesteckt werden kann; dass sich am anderen Ende der Spreizschraube etwa ab der Mitte ein erhabenes Schraubengewinde befindet, das dem Schraubengewinde im Inneren des Körpers entspricht; dass dieses Schraubengewinde aus dem Körper herausragt und am Ende des Schraubengewindes der Bohrkopf angebracht ist.

2. Die in einem Arbeitsgang einschraubbare Dübelschraube aus Anspruch **1, dadurch gekennzeichnet, dass** die Spreizschraube und der Körper zunächst zu einem Körper verbindbar sind und dann an der Außenseite der Spreizschraube mit Hilfe der Spritzformmethode der Körper anbringbar ist, wobei der Körper im Mittelteil des stangenförmigen Körpers in radialer Position eine Rille aufweist, die mit dem durchgehenden Loch verbunden ist.

3. Die in einem Arbeitsgang einschraubbare Dübelschraube aus Anspruch **1** oder **2, dadurch gekennzeichnet, dass** der Körper und die Spreizschraube aus Plastik(Nylon)-Material hergestellt sind und der Bohrkopf aus Metall (mittelgekohltem Stahl)-Material hergestellt ist.

4. Die in einem Arbeitsgang einschraubbare Dübelschraube aus einem der Ansprüche **1** bis **3, dadurch gekennzeichnet, dass** sich am Kopfteil des Körpers ein verbreiterter Stopprand befindet.

5. Die in einem Arbeitsgang einschraubbare Dübelschraube aus einem der Ansprüche **1** bis **4, dadurch gekennzeichnet, dass** sich an der stangenförmigen Außenseite des Körpers spiralförmige Erhebungen befinden.

6. Die in einem Arbeitsgang einschraubbare Dübelschraube aus einem der Ansprüche **1** bis **5, dadurch gekennzeichnet, dass** die Antriebskerbe der Spreizschraube eine hexagonale Form aufweist.

7. Die in einem Arbeitsgang einschraubbare Dübelschraube aus einem der Ansprüche **1** bis **5, dadurch gekennzeichnet, dass** die Antriebskerbe der Spreizschraube eine Kreuzform aufweist.

8. Die in einem Arbeitsgang einschraubbare Dübelschraube aus einem der Ansprüche **1** bis **5, dadurch gekennzeichnet, dass** die Antriebskerbe der Spreizschraube aus einer geraden Linie besteht.

9. Die in einem Arbeitsgang einschraubbare Dübelschraube aus einem der Ansprüche **1** bis **8, dadurch gekennzeichnet, dass** sich am Ende des erhabenen Schraubengewindes der Spreizschraube ein dichteres erhabenes Schraubengewinde befindet und dass sich im Zentrum des Bohrkopfes ein Loch mit einem Schraubengewinde befindet, in dem dieses dichtere Schraubengewinde festschraubbar ist.
